# EUROPÄISCHE PATENTSCHRIFT

(11) **EP 3 336 576 B1**
(45) Veröffentlichungstag und Bekanntmachung des Hinweises auf die Patenterteilung: **23.08.2023**
(21) Anmeldenummer: 17207231.6
(22) Anmeldetag: 14.12.2017
(51) Int. Cl.: G01S 7/481, G01S 17/89, G01S 7/4865

(54) **VERFAHREN ZUR ERFASSUNG EINER 3D-SZENE MITTELS EINES LIDAR-SYSTEMS UND LIDAR-SYSTEM HIERZU**
METHOD FOR DETECTING A 3D SCENE BY MEANS OF A LIDAR SYSTEM AND LIDAR SYSTEM FOR SAME
PROCÉDÉ DE DÉTECTION D'UNE SCÈNE TRIDIMENSIONNELLE AU MOYEN D'UN SYSTÈME LIDAR ET SYSTÈME LIDAR CORRESPONDANT

(30) Priorität: 16.12.2016 DE 102016124594
(43) Veröffentlichungstag der Anmeldung: 20.06.2018
(73) Patentinhaber: Jena Optronik GmbH, 07745 Jena (DE)
(72) Erfinder: KOLB, Florian, 07747 Jena (DE)
(74) Vertreter: Ege Lee & Roider Patentanwälte

(56) Entgegenhaltungen:
- EP-A1- 2 708 913
- US-A1- 2015 041 625
- US-A1- 2016 268 331

## Beschreibung

Die Erfindung betrifft Verfahren zur Erfassung einer 3D-Szene mittels eines LIDAR-Systems enthaltend einen Sender und einen Empfänger sowie eine zwischen Sender und 3D-Szene angeordnete verschwenkbare Spiegelanordnung, wobei der Sender als Laserlichtquelle betrieben wird und der Empfänger als Matrixsensor mit einer Einstrahloptik und über eine Oberfläche verteilt angeordneten Lichtsensoren ausgebildet ist, wobei mittels Lichtpulsen des Senders unter Verschwenkung der Spiegelanordnung ortsaufgelöst an Bildpunkten einer Punktwolke der 3D-Szene rückgestrahlte Lichtpunkte erzeugt werden und aus den Lichtpunkten jeweils von den Lichtsensoren ein Eingangssignal erfasst und eine Entfernung der Lichtpunkte zum Matrixsensor anhand einer Lichtlaufzeitmessung ermittelt wird, wobei mittels der Einstrahloptik jeweils ein defokussiertes, mehrere Lichtsensoren umfassendes Eingangssignal eines Lichtpunkts abgebildet wird und die Eingangssignale benachbarter Lichtsensoren miteinander verglichen werden. Ferner betrifft die Erfindung ein LIDAR-System zur Durchführung des Verfahrens.

Zur Aufnahme einer 3D-Szene in Form einer dreidimensionalen Punktwolke mit Bildpunkten sind in einem LIDAR-System prinzipiell drei unterschiedliche Elemente erforderlich:
a) ein Element zur Bestimmung der Entfernung zu einem ausgewählten Bildpunkt,
b) ein Element zur Auswahl eines Bildpunkts innerhalb der 3D-Szene,
c) eine (Laser-)Lichtquelle.

Für die Entfernungsbestimmung werden häufig zwei verschiedene Verfahren genutzt: Beispielsweise ein Verfahren mit einer Verwendung einer modulierten Laserlichtquelle und Ausnutzung von Phaseneffekten (z. B. Photonic Mixing Device, PMD) oder ein Verfahren zur Ermittlung einer Lichtlaufzeitmessung (Time-of-Flight, TOF) eines Laserpulses.

Wie beispielsweise aus der AT 505 037 B1 bekannt, kann die Auswahl eines Bildpunkts innerhalb der 3D-Szene mithilfe eines LIDAR-Systems mit einer Abtasteinrichtung, in welcher eine Punkt-für-Punkt-Abtastung mittels eines Spiegelsystems enthaltend bewegte Ablenkspiegel (scanning system) vorgesehen ist, erfolgen. Hierbei wird jeder Lichtpunkt der Punktwolke auf einem Einzelsensor, beispielsweise einer Photodiode abgebildet und deren Laufzeit oder Phaseneffekt ausgewertet.

Alternativ kann mittels eines LIDAR-Systems eine 3D-Szene auf ein Sensorarray mit einer Vielzahl von lateral auf einer Sensorfläche des Sensorarrays verteilten Lichtsensoren mittels einer vorgeschalteten Optik scharf abgebildet werden, wobei die Ortsauflösung anhand der Verteilung der abgebildeten Lichtpunkte auf den entsprechend positionierten Lichtsensoren erfolgt und die Entfernung der Bildpunkte der 3D-Szene einer nachgeschalteten Zeitmessfunktion oder Phasenauswertung für jeden einzelnen Lichtsensor und Bildpunkt ermittelt wird. Hierbei fallen die Elemente zur Bestimmung der Entfernung zu einem ausgewählten Bildpunkt und zur Auswahl eines Bildpunkts innerhalb der 3D-Szene zusammen.

Je nach Ausbildung des LIDAR-Systems werden unterschiedliche Laserlichtquellen eingesetzt. Ein LIDAR-System mit einer derartigen Abtasteinrichtung weist üblicherweise eine Laserlichtquelle mit einem einzelnen gepulsten einzelnen Laserstrahl auf, wobei die Pulse mithilfe eines Spiegelsystems über die 3D-Szene bewegt werden. Die Abtastung wie beispielsweise Rasterung der 3D-Szene wird somit mittels des Spiegelsystems durchgeführt. Im Gegensatz dazu beleuchtet bei einem LIDAR-Sensor mit Sensorarray, beispielsweise ein Flash-LIDAR oder eine 3D-Kamera die Laserlichtquelle die gesamte 3D-Szene auf einmal. Die Rasterung der 3D-Szene erfolgt durch das Sensorarray.

Das LIDAR-System mit der Abtasteinrichtung kann aufgrund des verwendeten Spiegelsystems prinzipiell beliebige Rasterungen der 3D-Szene vornehmen, da Auslenkung und Geschwindigkeit variabel sind. Da für jede Entfernungsmessung ein einzelner Laserpuls erforderlich ist, muss der verwendete Laser eine ausreichend hohe Pulswiederholrate, beispielsweise im Bereich von einigen kHz besitzen. Da nur ein Sende- und Detektionskanal vorgesehen ist, kann eine aufwendige Zeitmesselektronik mit hoher Auflösung und Genauigkeit eingesetzt werden. Die bewegten Massen des mechanischen Spiegelsystems begrenzen dabei die Geschwindigkeit des LIDAR-Systems. Dies ist insbesondere problematisch, wenn aufgrund von großer Reichweitenanforderung des LIDAR-Systems und daraus resultierender großer Empfangsoptik des Spiegelsystems entsprechend große Massen notwendig sind. Aufgrund der geringen Messwiederholungsrate eines LIDAR-Systems aufgrund des Einzelsensors kann bei sich schnell bewegenden Objekten eine Verzerrung innerhalb eines Bildes der 3D-Szene aufgrund der Eigenbewegung des Objekts auftreten. Weiterhin ist das mechanische Spiegelsystem Verschleiß unterworfen. Die Verwendung eines kleinen und schnellen Spiegelsystems, beispielsweise eines Mikrospiegels oder Mikrospiegelarrays für die Abtasteinrichtung und einer damit notwendigen Lichtsammeloptik für das gesamte Gesichtsfeld auf den Einzelsensor ist technisch nicht möglich, da sich für derartige Optiken nur minimale Transmissionen ergeben.

Beispielsweise aus "Performance modelling of miniaturized flash-imaging lidars for future Mars exploration missions", Alexandre Pollini, Jacques Haesler, Valentin Mitev, Joäo Pereira do Carmo, Paper 66403, International Conference on Space Optics 2014 ist ein LIDAR-System mit Sensorarray und einer sogenannten Flash-Laserlichtquelle bekannt. Im Gegensatz zu den LIDAR-Systemen mit Abtasteinrichtung weisen LIDAR-Systeme mit Sensorarray keine beweglichen Teile auf, da die Abtastung wie Rasterung der 3D-Szene durch die ortsaufgelöste Auswertung der Lichtsensoren des Sensorarrays erfolgt. Die mögliche Bildwiederholrate kann dabei deutlich höher als bei scannenden LIDAR-Systemen sein und ist prinzipiell durch die Ausgangsleistung der Laserlichtquelle und, um die Eindeutigkeit der Entfernungsmessung zu gewährleisten, durch die der Entfernung des mittels der 3D-Szene zu erfassenden Objekts begrenzt. Derartige LIDAR-Systeme müssen die vollständige 3D-Szene auf einmal ausleuchten, es ist also eine Pulsenergie erforderlich, die um mehrere Größenordnungen über der eines scannenden LIDAR-Systems liegt. Die benötigten Pulsenergien stellen für Laserlichtquellen daher eine generelle Einschränkung dar, da die optische Energie des Lichtpulses gespeichert werden muss, und die verwendeten optischen Elemente hohe Pulsspitzenleistungen verkraften müssen. Darüber hinaus ist die räumliche Auflösung durch die Anzahl der Bildpunkte des Sensorarrays begrenzt. Die zeitliche Auflösung dieser LIDAR-Systeme ist in der Regel schlechter als bei scannenden LIDAR-Systemen, da für jeden Lichtsensor eine eigene Zeitmesselektronik erforderlich ist.

Aus dem Dokument EP 2 708 913 A1 ist sind ein optoelektronische Sensor und ein Verfahren zur Objekterfassung bekannt. Der Sensor weist einen Lichtsender auf, beispielsweise eine Laserdiode, deren Sendelicht in Form kurzer Pulse zunächst in einer Sendeoptik kollimiert und dann von einem MEMS-Ablenkspiegel als Sendestrahl in einen Überwachungsbereich abgelenkt wird. Der MEMS-Ablenkspiegel schwingt auf einer Achse in Resonanz und wird in einer zweiten Achse langsam periodisch verschwenkt. Dadurch scannt ein Abtastlichtfleck zeilenweise den Überwachungsbereich ab. Das an Objekten in dem Überwachungsbereich remittierte Licht wird als Empfangslicht über eine Empfangsoptik auf einen Lichtempfänger mit einer Vielzahl von in Pixeln angeordneter Lichtempfangselemente geleitet. Dem Dokument EP 2 708 913 A1 zufolge stimmt die Brennebene der Empfangsoptik bevorzugt nicht mit einer Ebene des Lichtempfängers überein. Mit anderen Worten ist die Empfangsoptikabsichtlich defokussiert, sodass ein Empfangslichtfleck mehrere Lichtempfangselemente überstreicht. Es wird erwähnt, dass sich Freiheiten für die Anpassung der Empfindlichkeit durch die Anzahl zu einem Bildpunkt beitragender Lichtempfangselemente sowie die Mindestanzahl für die Erkennung eines Koinzidenzereignisses ergeben.

Aufgabe der Erfindung ist ein Verfahren zur Erfassung einer 3D-Szene mittels eines LIDAR-Systems vorzuschlagen. Weiterhin ist Aufgabe der Erfindung, ein LIDAR-System zur Erfassung einer 3D-Szene vorzuschlagen. Insbesondere soll mittels des Verfahrens und des LIDAR-Systems eine einfachere beziehungsweise verbesserte Erfassung der 3D-Szene vorgeschlagen werden. Insbesondere soll die Auflösung und/oder die Arbeitsgeschwindigkeit des LIDAR-Systems verbessert werden.

Die Erfindung ist in Anspruch 1 bzw. 9 definiert. Die Aufgabe wird durch die Gegenstände der Ansprüche 1 und 9 gelöst. Die von den Ansprüchen 1 und 9 abhängigen Ansprüche geben vorteilhafte Ausführungsformen der Gegenstände der Ansprüche 1 und 9 wieder.

Das vorgeschlagene Verfahren dient der Erfassung einer 3D-Szene mittels eines LIDAR-Systems. Insbesondere können mittels des Verfahrens 3D-Szenen in terrestrischen Anwendungen und in der Luft- und Raumfahrt erfasst werden. Beispielhaft sind dies terrestrische Objekte wie Fahrzeuge, Fußgänger und Hindernisse im Bereich der Automobilanwendung, Schiffe, Gebäude, Gegenstände, Tiere und Pflanzen, im Bereich der Luftfahrt beliebige Flugkörper, sowie Oberflächen von extraterrestrischen Raumkörpern wie beispielsweise Planeten, Monden, Asteroiden und dergleichen oder Raumflugkörpern wie beispielsweise Raumstationen, Raumfahrzeugen, Satelliten und dergleichen.

Das für das vorgeschlagene Verfahren vorgesehene LIDAR-System enthält einen Sender und einen Empfänger sowie eine zwischen Sender und 3D-Szene angeordnete verschwenkbare Spiegelanordnung, beispielsweise mit einem makroskopischen Spiegel, einen miniaturisierten Spiegel, einem Array aus Spiegeln, bevorzugt Mikrospiegeln, eine nach MEMS-Methoden (Micro-electro-mechanical, MicroElectroMechanical or microelectronic and microelectromechanical systems and the related micromechatronics) hergestellte Spiegeleinrichtung. Die Spiegeleinrichtung kann beispielsweise mittels eines Festkörpergelenks steuerbar ausgerichtet werden. Die derart ausgebildete Spiegelanordnung entspricht einer Abtasteinrichtung der 3D-Szene und kann hierzu beispielsweise zur Abtastung wie Rasterung der 3D-Szene in Azimuth- und Elevationsrichtung verschwenkbar sein. Entsprechende Neigungswinkel werden erfasst und legen dabei jeweils einen vorgegebenen, von einer Laserlichtquelle bestrahlten Bildpunkt der 3D-Szene fest. Als Sender dient eine Laserlichtquelle, die gepulst oder moduliert betrieben sein kann.

Der Empfänger ist als Matrixsensor, beispielsweise einem Sensorarray mit einer Vielzahl lateral über eine Oberfläche wie Sensorfläche verteilten Lichtsensoren gebildet, auf die von einer in den Strahlengang eingebundenen Einstrahloptik die von den einzelnen Bildpunkten reflektierten Lichtpulse abgebildet werden. Durch die Verschwenkung der Spiegelanordnung wird durch Anfahren der einzelnen Bildpunkte und Reflexion von Lichtpulsen der an diesen Bildpunkten eingestrahlten Laserlichtpulse eine Punktwolke der 3D-Szene ortsaufgelöst für jeden Bildpunkt ein von diesem reflektierter Lichtpunkt erzeugt. Dabei wird von den Lichtsensoren von jedem Lichtpunkt gegebenenfalls ebenfalls ortsaufgelöst ein Eingangssignal erfasst und eine Entfernung der Lichtpunkte der Punktwolke zum Matrixsensor anhand einer Lichtlaufzeitmessung ermittelt. Es wird vorgeschlagen, auf eine scharfe Abbildung der Lichtpulse zu verzichten und mittels der Einstrahloptik jeweils ein defokussiertes, mehrere Lichtsensoren umfassendes Eingangssignal eines Lichtpulses abzubilden. Die Eingangssignale benachbarter Lichtsensoren werden dabei miteinander verglichen. Aufgrund der defokussierten Lichtpunkte erfassen jeweils mehrere benachbarte Lichtsensoren diesen Lichtpunkt mit unterschiedlicher Intensität, so dass unter Anwendung entsprechender, die Intensitäten und/oder Laufzeiten des von den jeweiligen Lichtsensoren erfassten Lichtpunkten miteinander vergleichenden Algorithmen beispielsweise ein Rauschen der Lichtsensoren, Toleranzen der Laufzeitmessung und dergleichen eliminiert werden kann. Alternativ oder zusätzlich kann durch Mittelung, Schwerpunktbildung oder dergleichen eine Ortsauflösung der eingestrahlten Intensität eines Lichtpunktes unterhalb der durch die Anzahl der Lichtsensoren an der Oberfläche des Matrixsensors vorgegebenen Ortsauflösung (subpixel-Auflösung) erzielt werden. Alternativ oder zusätzlich kann durch Auswertung der Verhältnisse der Lichtsensoren untereinander eine sich über Betriebsdauer des LIDAR-Systems einstellende Degradierung des Senders, beispielsweise des Matrixsensors und/oder der Laserlichtquelle ermittelt werden.

Mittels des vorgeschlagenen Verfahrens kann das LIDAR-System von außen wartungsfrei über große Zeiträume betrieben werden und eignet sich in besonderer Weise für extraterrestrische Anwendungen ohne Zugriffsmöglichkeit. Insbesondere kann mittels des vorgeschlagenen Verfahrens das LIDAR-System laufend selbstkalibrierend und selbstadaptierend ausgelegt sein.

Gemäß einer vorteilhaften Ausführungsform des Verfahrens kann eine örtliche Zuordnung jeweils eines Lichtpunkts in der 3D-Szene anhand eines Strahlungswinkels der Lichtpulse an der Spiegelanordnung ermittelt werden. Beispielsweise kann der Strahlungswinkel anhand einer Stellung einer Auslenkeinrichtung der Spiegelanordnung ermittelt werden. Hierzu weisen entsprechende LIDAR-Systeme eine Spiegelanordnung mit einer entsprechenden Strahlwinkelerfassungseinrichtung auf, die in Signalverbindung mit dem Empfänger steht, so dass Sender und Empfänger bezüglich der zeitlichen und räumlichen Zuordnung von Ausgangssignalen der Laserlichtquelle und Eingangssignalen des Matrixsensors miteinander synchronisiert sind. Die Steuerung und Synchronisierung von Sender und Empfänger kann in dem Sender oder im Empfänger oder in einem übergeordneten Steuergerät vorgesehen sein.

Gemäß einer vorteilhaften Ausführungsform des vorgeschlagenen Verfahrens werden Laufzeitunterschiede jeweils eines von mehreren Lichtsensoren erfassten Lichtpunktes miteinander verglichen und bewertet. Durch die Bewertung der einzelnen Laufzeiten pro Lichtsensor können beispielsweise aktuelle Schwankungen und Abweichungen der Laufzeiten gegeneinander abgewogen werden. Beispielsweise kann mittels des Vergleichs der Laufzeitunterschiede eine Zeitmessung des gesamten LIDAR-Systems oder einzelner Lichtsensoren korrigiert werden. Beispielsweise können über ein vorgegebenes Maß abweichende Zeitmesseinrichtungen kalibriert werden, indem beispielsweise den entsprechenden Messalgorithmen entsprechend einstellbare Korrekturterme oder Koeffizienten hinzugefügt und laufend adaptiert werden.

Alternativ oder zusätzlich können die erfassten Lichtintensitäten jeweils eines von mehreren Lichtsensoren erfassten Lichtpunktes miteinander verglichen werden. Beispielsweise kann aus den Lichtintensitäten der Lichtsensoren ein Schwerpunkt größter Lichtintensität unabhängig von der lateralen Auflösung der Lichtsensoren ermittelt werden. Beispielsweise kann die Empfindlichkeit der einzelnen Lichtsensoren durch Korrelation der erfassten Eingangssignale kalibriert und adaptiert werden. In besonders vorteilhafter Weise kann mittels der Lichtintensitäten der Lichtsensoren eine Rauchunterdrückung vorgesehen werden. Hierbei kann ein statistisches, an unterschiedlichen Lichtsensoren unterschiedlich auftretendes Rauschen in besonders vorteilhafter Weise eliminiert werden. Eine Bewertung des an den jeweiligen Lichtsensoren auftretenden Rauschens kann abhängig von den an den Lichtsensoren jeweils unterschiedlich auftretenden Lichtintensitäten berücksichtigt werden.

Das vorgeschlagene LIDAR-System dient der Durchführung des vorgeschlagenen Verfahrens und enthält zumindest einen Lichtpulse emittierenden Sender, eine verschwenkbare Spiegelanordnung mit einer einen Strahlungswinkel der Lichtpulse einstellenden und erfassenden Auslenkeinrichtung. Zudem ist ein Empfänger für den Empfang der vom Sender ausgestrahlten und an den Bildpunkten einer Punktwolke einer 3D-Szene reflektieren Lichtpunkte vorgesehen. Der Empfänger enthält einen Matrixsensor mit einer Vielzahl, auf einer Oberfläche, beispielsweise in einer Ebene angeordneten Lichtsensoren und eine die Lichtpunkte defokussiert auf dem Matrixsensor abbildende Einstrahloptik. Die Einstrahloptik kann einstellbar vorgesehen sein, so dass der Grad der Defokussierung einstellbar ist.

Mit anderen Worten ist ausgehend von einem scannenden LIDAR-System nach Stand der Technik eine miniaturisierte Abtastvorrichtung in Form einer Spiegelanordnung vorgesehen. Aufgrund der geringen Dimensionen der Spiegelanordnung, insbesondere Spiegelanordnung sind geringere Massekräfte zu deren Auslenkung nötig, so dass diese schnell verschwenkt werden kann. Zudem ist ein Matrixsensor anstatt eines Einzelsensors als Empfänger vorgesehen. Der Empfänger enthält eine eingebaute Zeitmessung. Hierdurch kann eine verbesserte Auflösung bezüglich der Laufzeit und der räumlichen Auflösung wie folgt vorgeschlagen werden:
Die Bestimmung der Auslenkung der Spiegelanordnung erlaubt eine erhöhte räumliche Auflösung (x-y, Elevation-Azimut). Bei der vorgeschlagenen Spiegelanordnung kann aufgrund seiner geringen Trägheit die Auslenkung, also der Istwert im Wesentlichen der eingestellten Winkelgröße, also dem Sollwert gleichgesetzt werden. Darüber hinaus kann die Auslenkung der Spiegelanordnung gemessen, das heißt, der Istwert ermittelt werden, indem beispielsweise eine optische Auslenkungsbestimmung oder einer kapazitive Auslenkungsbestimmung vorgesehen wird.

Die Defokussierung der Einstrahloptik für den Matrixsensor wie beispielsweise Einzelphoton-Bildsensor anstatt einer scharfen Abbildung auf einen Einzelsensor hat den Vorteil, dass aufgrund der Defokussierung ein an einem Bildpunkt der Punktwolke einer 3D-Szene reflektierter Lichtpunkt auf mehrere Lichtsensoren wie Bildsensoren auftrifft. Dabei kann die Spiegelanordnung, beispielsweise gesteuert von einer Datenerfassungseinrichtung, einem Steuergerät oder dergleichen in einem vorgegebenen Muster über die 3D-Szene geführt werden. Mittels der Laserlichtquelle werden Laserpulse mit Wiederholungsraten im Bereich von beispielsweise mehreren kHz bis MHz erzeugt. Die Position der Spiegelanordnung wird von einer internen Datenverarbeitung erfasst und gespeichert.

Beispielsweise kann ein Auslesen und Verarbeiten von Eingangssignalen einzelner Lichtsensoren des Matrixsensors einschließlich der sich aufgrund der Defokussierung ergebenden umgebenden Lichtsensoren auf ortsaufgelöst der Position der Spiegelanordnung entsprechende Lichtsensoren beschränkt werden. Diese oder alle erfassten Eingangssignale der Lichtsensoren werden ausgelesen und in der internen Datenverarbeitungseinrichtung erfasst und gespeichert. Erfindungsgemäß werden die in den einzelnen Lichtsensoren erfassten Zeitwerte für die in den entsprechenden Lichtsensoren erfassten Lichtpulse zu einem zeitlichen Histogramm kombiniert . Dabei wird eine exakte Entfernung zwischen einem Bildpunkt und dem Matrixsensor aus dem Maximum des Histogramms ermittelt. Eine exakte räumliche Position eines Bildpunkts kann aufgrund der Auslenkung der Spiegelanordnung oder alternativ durch eine subpixelgenaue Ermittlung eines Schwerpunkts der Signalintensitäten der bestrahlten Lichtsensoren ermittelt werden. Beide Möglichkeiten können zur weiteren Verbesserung der räumlichen Auflösung und/oder zur Durchführung von Plausibilitätsprüfungen miteinander kombiniert werden.

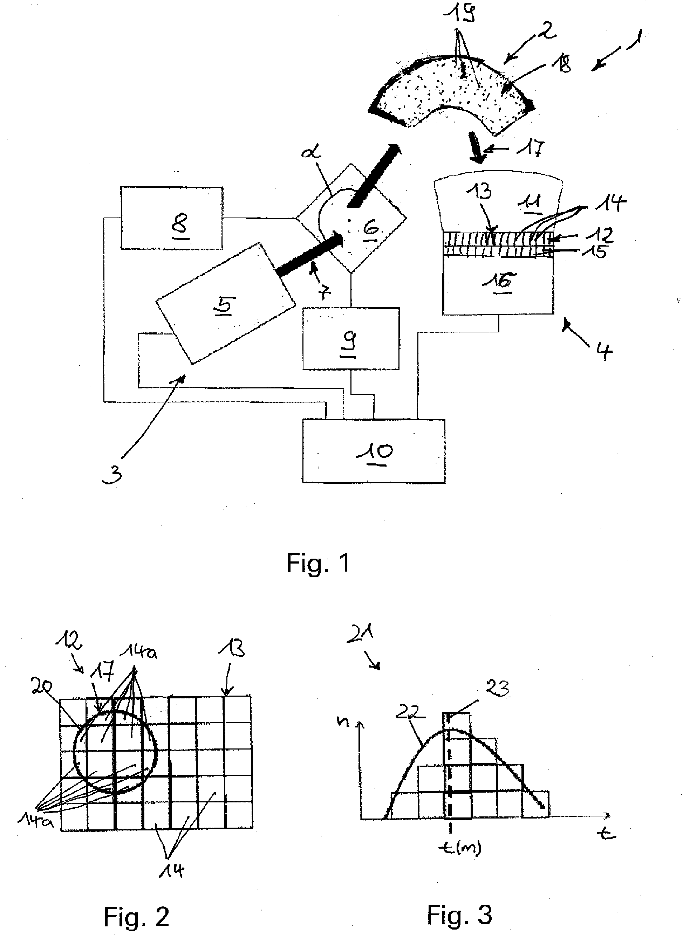

Einer gegebenenfalls vorhandenen Beschränkung einer Entfernungsauflösung durch eine begrenzte Zeitmessung der einzelnen Lichtsensoren des Matrixsensors kann gegebenenfalls entgegen gewirkt werden, indem die Eingangssignale mehrerer Lichtsensoren zusammengefasst und statistisch ausgewertet werden. Eine fehlerhafte Erfassung von Eingangssignalen an Lichtsensoren infolge eines störenden Hintergrundlichts kann ausgeschlossen werden, indem lediglich die abhängig von der eingestellten Auslenkung der Spiegelanordnung und entsprechend von den Bildpunkten einer Punktwolke der 3D-Szene rückgestreuten Lichtpunkten betroffenen Lichtsensoren ausgewertet werden. Darüber hinaus kann mittels einer statistischen Auswertung der auf einen Lichtpunkt zurückzuführenden, defokussierten Eingangssignale an den entsprechenden Lichtsensoren der Einfluss von Fehlauslösungen und damit das Rauschen verringert werden. Je nach Maß der Defokussierung kann das LIDAR-System bei größerer Defokussierung auf eine höhere Genauigkeit und geringeres Rauschen oder bei verminderter Defokussierung auf eine höhere Empfindlichkeit ausgelegt werden. Die Erfindung wird anhand des in den Figuren 1 bis 3 dargestellten Ausführungsbeispiels näher erläutert. Dabei zeigen:
- Figur 1: ein LIDAR-System in systematischer Darstellung,
- Figur 2: die Oberfläche des Matrixsensors der Figur 1
und
- Figur 3: ein Diagramm zur Auswertung von auf mehreren Lichtsensoren eintreffenden Eingangssignalen.

Die Figur 1 zeigt in schematischer Darstellung das LIDAR-System 1 zur Erfassung der 3D-Szene 2 mittels des Senders 3 und des Empfängers 4.

Der Sender 3 enthält die Laserlichtquelle 5. Die Laserlichtquelle 5 sendet gepulste oder modulierte Lichtpulse 7 aus, die auf die Spiegelanordnung 6, beispielsweise eine Mikrospiegelanordnung oder eine Mikrospiegelarrayanordnung gelenkt werden. Die Spiegelanordnung 6 ist in zwei Auslenkrichtungen wie in Y-Richtung und X-Richtung beziehungsweise in Elevations- und Azimutrichtung steuerbar. Hierzu sind die beiden Auslenkeinrichtungen 8, 9 vorgesehen, die jeweils einen vorgegebenen Auslenkwinkel zur Einstellung eines Strahlungswinkels α vorgeben. Die Auslenkwinkel sowie die Ausgabezeiten der Lichtpulse 7 werden auf die Datenverarbeitungseinrichtung 10 übertragen und gespeichert.

Der Empfänger 4 enthält die Einstrahloptik 11 und den Matrixsensor 12 einer Vielzahl an der Oberfläche 13 wirksam lateral verteilten Lichtsensoren 14. Die Lichtsensoren 14 verfügen jeweils über eine Empfindlichkeits- und Zeitmessungsvorrichtung 15, deren Eingangssignale in der Erfassungseinrichtung 16 erfasst und auf die Datenverarbeitungseinrichtung 10 übertragen werden.

Die Lichtpulse 7 werden abhängig von der Auslenkung der Spiegelanordnung 6 in zeitlicher Abfolge auf Bildpunkte 19 der 3D-Szene 2 gelenkt und erzeugen dort eine Punktwolke 18 aus reflektierten Lichtpunkten 17. Die Lichtpunkte 17 treffen zeitlich versetzt auf die Einstrahloptik 11 des Empfängers 4. Die Einstrahloptik 11 strahlt einen aus jeweils einem Lichtpuls 7 durch Reflexion an einem Bildpunkt 19 der Punktwolke 18 entstandenen Lichtpunkt 17 defokussiert auf die Oberfläche 13, so dass mehrere benachbarte Lichtsensoren 14 ein Eingangssignal des Lichtpunkts 17 empfangen. Die entsprechenden Eingangssignale werden für jeden Lichtpunkt 17 in der Datenverarbeitungseinrichtung 10 gespeichert und zeitsynchron mit dem zugehörigen Lichtpuls verglichen. Aus der Laufzeit (time-of-fly, TOF) des Lichtpulses 7 und des zugehörigen Lichtpunkts 17 wird der Abstand von dem entsprechenden Bildpunkt der Punktwolke und der Oberfläche 13 oder dergleichen ermittelt, so dass über die ermittelten Lichtpunkte 17 eine dreidimensionale Gestalt der 3D-Szene 2 berechnet werden kann.

In bevorzugter Weise werden lediglich Lichtsensoren 14 ausgewertet, die mit dem entsprechenden Lichtpuls 7 des entsprechenden Strahlungswinkels der Spiegelanordnung 6 korrelieren. Aus der statistischen Auswertung der Eingangssignale eines Lichtpunkts 17 werden statistische Streuungen der Zeitmesseinrichtungen der einzelnen Lichtsensoren 14 eliminiert. Zudem kann eine Subpixelauflösung des Matrixsensors 12 erzielt werden, indem eine statistische Auswertung der Signalintensitäten der Eingangssignale der Lichtsensoren 14 ausgewertet wird. Mittels der Erfassung des Abbildungsorts einer entsprechenden Anzahl von Lichtpunkten 17 können gegebenenfalls die Auslenkeinrichtungen 8, 9 überprüft und gegebenenfalls korrigiert werden. Durch statistische Auswertung der Signalintensitäten der Eingangssignale eines Lichtpunktes 17 kann das Rauschen der einzelnen Lichtsensoren 14 ermittelt und gegebenenfalls korrigiert beziehungsweise das Rauschen eliminiert oder zumindest dessen Einfluss auf die Eingangssignale verringert werden.

Die Figur 2 zeigt die Oberfläche 13 des Matrixsensors 12 des LIDAR-Systems 1 der Figur 1 in schematischer Darstellung und einer der Übersichtlichkeit halber geringen Anzahl von Lichtsensoren 14. Der auf der Oberfläche 13 abgebildete Kreis 20 stellt einen durch die Einstrahloptik 11 (Figur 1) defokussierten Lichtpunkt 17 dar, so dass an den Lichtsensoren 14a jeweils Eingangssignale erfasst werden. Durch den Vergleich der Eingangszeiten der Eingangssignale der Lichtsensoren 14a untereinander und mit der Startzeit des dem Lichtpunkt 17 zugrunde liegenden Lichtpulses der Laserlichtquelle kann über unterschiedliche Laufzeiten gemittelt werden und damit ein Fehler in der Zeitabweichung der Zeitmessungen der einzelnen Lichtsensoren 14a gemittelt und damit die Entfernungsmessung zwischen der 3D-Szene und dem Empfänger verbessert werden.

Die Figur 3 zeigt eine Zeitverteilung der einzelnen Lichtsensoren 14a der Figur 2 als Diagramm 21 mit der Anzahl n von Eingangssignalen über die Zeit t. Die Kurve 22 gibt die Zeitverteilung der Eingangssignale und die gestrichelte Linie 23 den Mittelwert t(m) der Laufzeit der Eingangssignale wieder.

### Bezugszeichenliste

- 1: LIDAR-System
- 2: 3D-Szene
- 3: Sender
- 4: Empfänger
- 5: Laserlichtquelle
- 6: Spiegelanordnung
- 7: Lichtpuls
- 8: Auslenkeinrichtung
- 9: Auslenkeinrichtung
- 10: Datenverarbeitungseinrichtung
- 11: Einstrahloptik
- 12: Matrixsensor
- 13: Oberfläche
- 14: Lichtsensor
- 14a: Lichtsensor
- 15: Empfindlichkeits- und Zeitmesseinrichtung
- 16: Erfassungseinrichtung
- 17: Lichtpunkt
- 18: Punktwolke
- 19: Bildpunkt
- 20: Kreis
- 21: Diagramm
- 22: Kurve
- 23: Linie
- n: Anzahl
- t: Zeit
- t(m): Mittelwert
- α: Strahlungswinkel

## Patentansprüche

1. Verfahren zur Erfassung einer 3D-Szene (2) mittels eines LIDAR-Systems (1) enthaltend einen Sender (3) und einen Empfänger (4) sowie eine zwischen Sender (3) und 3D-Szene (2) angeordnete verschwenkbare Spiegelanordnung (6), wobei der Sender (3) als Laserlichtquelle (5) betrieben wird und der Empfänger (4) als Matrixsensor (12) mit einer Einstrahloptik (11) und über eine Oberfläche (13) verteilt angeordneten Lichtsensoren (14, 14a) ausgebildet ist, wobei mittels Lichtpulsen (7) des Senders (3) unter Verschwenkung der Spiegelanordnung (6) ortsaufgelöst an Bildpunkten (19) einer Punktwolke (18) der 3D-Szene (2) rückgestrahlte Lichtpunkte (17) erzeugt werden und aus jedem dieser Lichtpunkte (17) von den Lichtsensoren (14, 14a) ein Eingangssignal erfasst und eine Entfernung der Lichtpunkte (17) zum Matrixsensor (12) anhand einer Lichtlaufzeitmessung ermittelt wird, wobei mittels der Einstrahloptik (11) jeweils ein defokussiertes, mehrere Lichtsensoren (14a) umfassendes Eingangssignal eines Lichtpunkts (17) abgebildet wird und die Eingangssignale benachbarter Lichtsensoren (14a) miteinander verglichen werden, **dadurch gekennzeichnet, dass** in den Lichtsensoren (14a) erfasste Zeitwerte für die in den entsprechenden Lichtsensoren (14a) erfassten Lichtpulse (7) zu einem zeitlichen Histogramm kombiniert werden, wobei die Entfernung der Lichtpunkte (17) zum Matrixsensor (12) basierend auf dem Maximum des Histogramms ermittelt wird.

2. Verfahren nach Anspruch 1, **dadurch gekennzeichnet, dass** eine örtliche Zuordnung jeweils eines Lichtpunkts (17) in der 3D-Szene (2) anhand eines Strahlungswinkels (α) der Lichtpulse (7) an der Spiegelanordnung (6) ermittelt wird.

3. Verfahren nach Anspruch 2, **dadurch gekennzeichnet, dass** der Strahlungswinkel (α) anhand einer Stellung einer Auslenkeinrichtung (8, 9) der Spiegelanordnung (6) ermittelt wird.

4. Verfahren nach einem der Ansprüche 1 bis 3, **dadurch gekennzeichnet, dass** Laufzeitunterschiede jeweils eines von mehreren Lichtsensoren (14a) erfassten Lichtpunktes (17) miteinander verglichen und bewertet werden.

5. Verfahren nach Anspruch 4, **dadurch gekennzeichnet, dass** mittels des Vergleichs der Laufzeitunterschiede eine Zeitmessung des LIDAR-Systems (1) korrigiert wird.

6. Verfahren nach einem der Ansprüche 1 bis 5, **dadurch gekennzeichnet, dass** Lichtintensitäten jeweils eines von mehreren Lichtsensoren (14a) erfassten Lichtpunktes (17) miteinander verglichen werden.

7. Verfahren nach Anspruch 6, **dadurch gekennzeichnet, dass** aus den Lichtintensitäten der Lichtsensoren (14a) ein Schwerpunkt größter Lichtintensität unabhängig von der lateralen Auflösung der Lichtsensoren (14a) ermittelt wird.

8. Verfahren nach Anspruch 6 oder 7, **dadurch gekennzeichnet, dass** mittels der auf den Lichtsensoren (14a) auftreffenden Lichtintensitäten der Lichtpunkte (17) ein Rauschen der Lichtsensoren (14a) vermindert wird.

9. LIDAR-System (1) eingerichtet für die Durchführung des Verfahrens nach einem der Ansprüche 1 bis 8 mit einem Lichtpulse (7) emittierenden Sender (3), einer verschwenkbaren Spiegelanordnung (6) mit einer einen Strahlungswinkel (α) der Lichtpulse (7) einstellenden und erfassenden Auslenkeinrichtung (8, 9) sowie einem als Matrixsensor (12) ausgebildeten Empfänger (4) mit einer Vielzahl auf einer Oberfläche (13) lateral verteilt angeordneter Lichtsensoren (14, 14a) und einer die von Bildpunkten (19) einer Punktwolke (18) reflektierten Lichtpunkte (17) defokussiert auf die Oberfläche (13) des Matrixsensors (12) abbildenden Einstrahloptik (11).

10. LIDAR-System (1) nach Anspruch 9, **dadurch gekennzeichnet, dass** der Grad der Defokussierung einstellbar ist.

## Claims

1. Method for detecting a 3D scene (2) by means of a LIDAR system (1) including a transmitter (3) and a receiver (4) as well as a pivotable mirror arrangement (6) arranged between the transmitter (3) and the 3D scene (2), wherein the transmitter (3) is operated as a laser light source (5) and the receiver (4) is configured as a matrix sensor (12) with a single-beam optical system (11) and light sensors (14, 14a) distributed over a surface (13), wherein by means of light pulses (7) of the transmitter (3), light points (17) which are reflected back are generated with spatial resolution at image points (19) of a point cloud (18) of the 3D scene (2) while the mirror arrangement (6) is pivoted, and from each of these light points (17) of the light sensors (14, 14a) an input signal is determined, and a distance of the light points (17) to the matrix sensor (12) is determined on the basis of a time-of-flight measurement, wherein a defocused input signal of a light point (17) comprising a plurality of light sensors (14a) is imaged by means of the single-beam optical system (11), and the input signals of adjacent light sensors (14a) are compared with one another, characterised that time values determined in the light sensors (14a) for the light pulses (7) determined in the corresponding light sensors (14a) are combined into a temporal histogram, wherein the distance between the light points (17) and the matrix sensor (12) is determined from the maximum of the histogram.

2. Method according to claim 1, **characterised in that** a spatial allocation of a respective light point (17) in the 3D scene (2) is determined on the basis of a radiation angle (α) of the light pulses (7) on the mirror arrangement (6).

3. Method according to claim 2, **characterised in that** the radiation angle (α) is determined on the basis of a position of a deflecting device (8, 9) of the mirror arrangement (6).

4. Method according to any one of claims 1 to 3, **characterised in that** propagation time differences of a respective light point (17) determined by a plurality of light sensors (14a) are compared with one another and evaluated.

5. Method according to claim 4, **characterised in that** a time measurement of the LIDAR system (1) is corrected by the comparison of propagation time differences.

6. Method according to any one of claims 1 to 5, **characterised in that** light intensities of a respective light point (17) determined by a plurality of light sensors (14a) are compared with one another.

7. Method according to claim 6, **characterised in that** a centre of greatest light intensity is determined from the light intensities of the light sensors (14a) independently of the lateral resolution of the light sensors (14a).

8. Method according to claim 6 or 7, **characterised in that** noise from the light sensors (14a) is reduced by means of the light intensities of the light points (17) impinging on the light sensors (14a).

9. LIDAR system (1) configured to perform the method according to any one of claims 1 to 8 comprising a transmitter (3) that emits light pulses (7), a pivotable mirror arrangement (6) with a deflecting device (8, 9) which sets and determines a radiation angle (α) of the light pulses (7) as well as a receiver (4) configured as a matrix sensor (12) with a plurality of light sensors (14, 14a) distributed laterally on a surface (13) and a single-beam optical system (11) which projects the light points (17) reflected by pixels (19) of a point cloud (18) onto the surface (13) of the matrix sensor (12) in a defocused manner.

10. LIDAR system (1) according to claim 9, **characterised in that** the degree of defocusing is adjustable.

## Revendications

1. Procédé de détection d'une scène tridimensionnelle (2) au moyen d'un système LIDAR (1) comprenant un émetteur (3) et un récepteur (4) ainsi qu'un agencement de miroir pivotant (6) agencé entre l'émetteur (3) et la scène tridimensionnelle (2), l'émetteur (3) fonctionnant en tant que source de lumière laser (5) et le récepteur (4) étant réalisé en tant que capteur matriciel (12) avec une optique à faisceau unique (11) et des capteurs de lumière (14, 14a) répartis sur une surface (13), dans lequel, au moyen d'impulsions lumineuses (7) de l'émetteur (3), des points lumineux (17) rétrodiffusés avec une résolution locale sont générés sur des points d'image (19) d'un nuage de points (18) de la scène tridimensionnelle (2) en faisant pivoter l'agencement de miroir (6) et, à partir de chacun de ces points lumineux (17), un signal d'entrée est détecté par les capteurs de lumière (14, 14a) et une distance des points lumineux (17) par rapport au capteur matriciel (4) est déterminée à l'aide d'une mesure du temps de propagation de la lumière et, un signal d'entrée défocalisé d'un point lumineux (17), comprenant plusieurs capteurs de lumière (14a), étant reproduit à chaque fois au moyen de l'optique à faisceau unique (11), et les signaux d'entrée de capteurs de lumière (14a) voisins étant comparés les uns aux autres, **caractérisé en ce que** des valeurs de temps détectées dans les capteurs de lumière (14a) pour les impulsions lumineuses (7) détectées dans les capteurs de lumière (14a) correspondants sont combinées pour former un histogramme temporel, la distance des points lumineux (17) par rapport au capteur matriciel (12) étant déterminée sur la base du maximum de l'histogramme.

2. Procédé selon la revendication 1, **caractérisé en ce qu'**une affectation locale de chaque point lumineux (17) dans la scène tridimensionnelle (2) est déterminée à l'aide d'un angle de rayonnement (α) des impulsions lumineuses (7) sur l'agencement de miroir (6).

3. Procédé selon la revendication 2, **caractérisé en ce que** l'angle de rayonnement (α) est déterminé à l'aide d'une position d'un dispositif de déviation (8, 9) de l'agencement de miroir (6).

4. Procédé selon l'une des revendications 1 à 3, **caractérisé en ce que** des différences de temps de propagation d'un point lumineux (17) détecté par plusieurs capteurs de lumière (14a) sont comparées entre elles et évaluées.

5. Procédé selon la revendication 4, **caractérisé en ce qu'**une mesure de temps du système LIDAR (1) est corrigée au moyen de la comparaison des différences de temps de propagation.

6. Procédé selon l'une des revendications 1 à 5, **caractérisé en ce que** des intensités lumineuses de respectivement un point lumineux (17) détecté par plusieurs capteurs de lumière (14a) sont comparées entre elles.

7. Procédé selon la revendication 6, **caractérisé en ce que**, à partir des intensités lumineuses des capteurs de lumière (14a), un centre de gravité de la plus grande intensité lumineuse est déterminé indépendamment de la résolution latérale des capteurs de lumière (14a).

8. Procédé selon la revendication 6 ou 7, **caractérisé en ce qu'**un brouillage des capteurs de lumière (14a) est réduit au moyen des intensités lumineuses des points lumineux (17) qui atteignent les capteurs de lumière (14a).

9. Système LIDAR (I) configuré pour la mise en oeuvre du procédé selon l'une des revendications 1 à 8 avec un émetteur (3) émettant des impulsions lumineuses (7), un agencement de miroir (6) pivotant avec un dispositif de déviation (8, 9) réglant et détectant un angle de rayonnement (α) des impulsions lumineuses (7) ainsi qu'un récepteur (4) réalisé en tant que capteur matriciel (12) avec une pluralité de capteurs de lumière (14, 14a) répartis latéralement sur une surface (13) et une optique à faisceau unique (11) reproduisant de manière défocalisée sur la surface (13) du capteur matriciel (12) les points lumineux (17) réfléchis par des points d'image (19) d'un nuage de points (18).

10. Système LIDAR (1) selon la revendication 9, **caractérisé en ce que** le degré de défocalisation est réglable.
